# EUROPEAN PATENT APPLICATION

(11) **EP 3 537 367 A1**
(43) Date of publication of application: **11.09.2019**
(21) Application number: 19160130.1
(22) Date of filing: 28.02.2019
(51) Int. Cl.: G06Q 30/02

(54) **FACILITATING CAPTURING AIRCRAFT FLIGHT SEGMENT**

(30) Priority: 06.03.2018 US 201862639361 P; 20.11.2018 US 201816197032
(71) Applicant: General Electric Company, Schenectady, NY 12345 (US)
(72) Inventor: FIELDS, Troy, West Chester, OH 45069 (US); FREELY, Brendan, Evendale, OH 45241 (US); OSGOOD, Daniel Endecott, Evendale, OH 45241 (US); RUGGIERO, Eric, Cincinnati, OH 45215 (US)
(74) Representative: Openshaw & Co.

(57) **Abstract**

Systems, computer-implemented methods 1400 and/or computer program products that facilitate capturing aircraft flight segment are provided. In one embodiment, a computer-implemented method 1300 comprises: respectively providing 1302, by a mobile computing device comprising a processor, data sets, wherein the data sets include operation, location, altitude, speed, orientation, vibration data and noise data of an aircraft; classifying 1304, by the mobile computing device, the data sets into current flight segment, state of aircraft engine and type of engine; and generating 1306, by the mobile computing device, a visualization regarding the current flight segment, the state of aircraft engine and the type of engine. In another embodiment, a computer-implemented method 1400 comprises: performing 1402, by a system operatively coupled to a processor, an Internet search and aggregates historical flight information relevant to a user to determine at least one of: user lifetime air mileage, flight segments traveled, aircraft traveled, engine usage, statistics on cruise speeds, altitudes or frequent flyer miles; and scanning 1404, by the system, the Internet search for live information displayed via social media or news outlets that is relevant to the user's travel history.

## Description

### BACKGROUND

The subject disclosure relates to facilitating capturing aircraft flight segment, and more specifically, using a mobile computing device to capture aircraft flight segment.

### SUMMARY

The following presents a summary to provide a basic understanding of one or more aspects of the invention. This summary is not intended to identify key or critical elements or delineate any scope of the particular aspects or any scope of the claims. Its sole purpose is to present concepts in a simplified form as a prelude to the more detailed description that is presented later. In one or more aspects herein, devices, systems, computer-implemented methods, apparatus and/or computer program products facilitate capturing aircraft flight segment.

According to another aspect, a computer-implemented method is provided. The computer-implemented method can comprise performing, by a system operatively coupled to a processor, an Internet search and aggregating historical flight information relevant to a user to determine at least one of: user lifetime air mileage, flight segments traveled, aircraft traveled, engine usage, statistics on cruise speeds, altitudes or frequent flyer miles. The computer-implemented method can further comprise scanning, by the system, the Internet search for live information displayed via social media or news outlets that is relevant to the user's travel history.

In some aspects, the computer-implemented method can further comprise syncing information from the Internet search to a user account to generate user lifetime flight statistics. The performing the Internet search and aggregating historical flight information relevant to the user can comprise syncing location data of photos to the historical flight information relevant to the user. The performing the Internet search and aggregating historical flight information relevant to the user can comprise syncing vibration data and noise data from the user account of different users and evaluating comfort levels on a seat by seat basis or comfort levels of flight or satisfaction of service. The computer-implemented method can further comprise employing various sources of information to determine whether the user completed a task of traveling and validating the frequent flyer miles. The computer-implemented method can further comprise assisting with scheduling flights to achieve a certain frequent flyer miles class. The computer-implemented method can further comprise selecting a light emitting diode (LED) setting to display on an engine cowling. The computer-implemented method can further comprise streaming packets of continuous engine operating data (CEOD) from the engine to a mobile computing device.

According to another aspect, a system is provided. The system can comprise a memory that stores computer executable components. The system can also comprise a processor, operably coupled to the memory, and that can execute computer executable components stored in the memory. The computer executable components can comprise a search component that performs an Internet search and aggregates historical flight information relevant to a user to determine at least one of: user lifetime air mileage, flight segments traveled, aircraft traveled, engine usage, statistics on cruise speeds, altitudes or frequent flyer miles. The computer executable components can further comprise a machine learning component that scans the Internet search for live information displayed via social media or news outlets that is relevant to the user's travel history.

In some aspects, the computer executable components can further comprise a sync component that syncs information from the Internet search to a user account to generate user lifetime flight statistics. The search component can also sync location data of photos to the historical flight information relevant to the user. The search component can also sync vibration data and noise data from the user account of different users and evaluates comfort levels on a seat by seat basis or comfort levels of flight or satisfaction of service. The computer executable components can further comprise an audit component that employs various sources of information to determine whether the user completed a task of traveling and validates the frequent flyer miles. The computer executable components can further comprise a scheduling component that assists with scheduling flights to achieve a certain frequent flyer miles class. The computer executable components can further comprise a resolution component that selects a light emitting diode (LED) setting to display on an engine cowling. The computer executable components can further comprise a communication component that streams packets of continuous engine operating data (CEOD) from the engine to a mobile computing device.

According to another aspect, a computer program product facilitating capturing aircraft flight segment is provided. The computer program product can comprise a computer readable storage medium having program instructions embodied therewith. The program instructions can be executable by a processor to cause the processor to perform an Internet search and aggregate historical flight information relevant to a user to determine at least one of: user lifetime air mileage, flight segments traveled, aircraft traveled, engine usage, statistics on cruise speeds, altitudes or frequent flyer miles. The program instructions can further be executable by a processor to cause the processor to scan the Internet search for live information displayed via social media or news outlets that is relevant to the user's travel history.

In some aspects, the program instructions can be further executable to cause the processor to sync information from the Internet search to a user account to generate user lifetime flight statistics. The program instructions can be further executable to cause the processor to sync location data of photos to the historical flight information relevant to the user. The program instructions can be further executable to cause the processor to sync vibration data and noise data from the user account of different users and evaluate comfort levels on a seat by seat basis or comfort levels of flight or satisfaction of service. The program instructions can be further executable to cause the processor to employ various sources of information to determine whether the user completed a task of traveling and validate the frequent flyer miles. The program instructions can be further executable to cause the processor to assist with scheduling flights to achieve a certain frequent flyer miles class. The program instructions can be further executable to cause the processor to select a light emitting diode (LED) setting to display on an engine cowling. The program instructions can be further executable to cause the processor to stream packets of continuous engine operating data (CEOD) from the engine to a mobile computing device.

According to another aspect, a computer-implemented method is provided. The computer-implemented method can comprise respectively providing, by a mobile computing device comprising a processor, data sets, wherein the data sets include operation, location, altitude, speed, orientation, vibration data and noise data of an aircraft. The computer-implemented method can further comprise classifying, by the mobile computing device, the data sets into current flight segment, state of aircraft engine and type of engine. The computer-implemented method can further comprise generating, by the mobile computing device, a visualization regarding the current flight segment, the state of aircraft engine and the type of engine.

The classifying the data sets into current flight segment can comprise determining at least one of whether: an aircraft engine is at idle, the aircraft is in takeoff, the aircraft is climbing, the aircraft is cruising, the aircraft is landing, or thrust reverse levels of the aircraft. The respectively providing the data sets can comprise receiving aircraft engine audio information and determining the state of aircraft engine based in part on analysis of audio information of the aircraft engine.

In some aspects, the computer-implemented method can further comprise providing questions for rating of comfort level of seat or flight or satisfaction of service. The respectively providing the data sets can comprise receiving streaming packets of continuous engine operating data (CEOD) from the engine to the mobile computing device. The generating the visualization regarding the current flight segment can comprise not providing the current flight segment or the state of aircraft engine if certain conditions are met. The generating the visualization regarding the current flight segment can comprise receiving approval whether to provide the current flight segment or the state of aircraft engine.

In some aspects, the computer-implemented method can further comprise integrating the data sets, the classified data or the generated visualization onto a user account. The computer-implemented method can further comprise enabling sharing of information between user accounts associated with respective mobile computing devices. The computer-implemented method can further comprise employing visual indications to provide an overlay of engine information inside the aircraft. The employing visual indications can comprise providing an overlay of location information, using a global positioning system, that includes geography and history. The employing visual indications can comprise providing an overlay of crew information that crew members opt to share. The computer-implemented method can further comprise enabling controlling light emitting diode (LED) settings on an engine cowling.

According to one aspect, a mobile computing device is provided. The mobile computing device can comprise a memory that stores computer executable components. The mobile computing device can also comprise a processor, operably coupled to the memory, and that can execute computer executable components stored in the memory. The computer executable components can comprise one or more sensors that respectively provide data sets, wherein the data sets include operation, location, altitude, speed, orientation, vibration data and noise data of an aircraft. The computer executable components can further comprise a machine learning component that classifies the data sets into current flight segment, state of aircraft engine and type of engine. The computer executable components can further comprise an output component that generates a visualization regarding the current flight segment, the state of aircraft engine and the type of engine.

The one or more sensors can comprise an accelerometer, and the machine learning component can also determine at least one of whether: an aircraft engine is at idle, the aircraft is in takeoff, the aircraft is climbing, the aircraft is cruising, the aircraft is landing, or thrust reverse levels of the aircraft. The one or more sensors can also comprise a microphone that receives aircraft engine audio information, and the machine learning component can also determine the state of aircraft engine based in part on analysis of audio information of the aircraft engine.

In some aspects, the computer executable components can further comprise an evaluation component that provides questions for rating of comfort level of seat or flight or satisfaction of service. The one or more sensors can also receive streaming packets of continuous engine operating data (CEOD) from the engine to the mobile computing device. The output component can also not provide the current flight segment or the state of aircraft engine if certain conditions are met. The output component can also receive approval whether to provide the current flight segment or the state of aircraft engine.

In some aspects, the computer executable component can further comprise an integration component that integrates the data sets, the classified data or the generated visualization onto a user account. The computer executable component can further comprise a transmission component that enables sharing of information between user accounts associated with respective mobile computing devices. The computer executable component can further comprise an augmented reality component that employs visual indications to provide an overlay of engine information inside the aircraft. The augmented reality component can also provide an overlay of location information, using a global positioning system, that includes geography and history. The augmented reality component can also provide an overlay of crew information that crew members opt to share. The computer executable components can further comprise an interactive component that enables controlling light emitting diode (LED) settings on an engine cowling.

According to another aspect, a computer program product facilitating capturing aircraft flight segment is provided. The computer program product can comprise a computer readable storage medium having program instructions embodied therewith. The program instructions can be executable by a processor to cause the processor to respectively provide data sets, wherein the data sets include operation, location, altitude, speed, orientation, vibration data and noise data of an aircraft. The program instructions can further be executable by a processor to cause the processor to classify the data sets into current flight segment, state of aircraft engine and type of engine. The program instructions can further be executable by a processor to cause the processor to generate a visualization regarding the current flight segment, the state of aircraft engine and the type of engine.

The program instructions can be further executable to cause the processor to determine at least one of whether: an aircraft engine is at idle, the aircraft is in takeoff, the aircraft is climbing, the aircraft is cruising, the aircraft is landing, or thrust reverse levels of the aircraft. The program instructions can be further executable to cause the processor to receive aircraft engine audio information and determine the state of aircraft engine based in part on analysis of audio information of the aircraft engine. The program instructions can be further executable to cause the processor to provide questions for rating of comfort level of seat or flight or satisfaction of service. The program instructions can be further executable to cause the processor to receive streaming packets of continuous engine operating data (CEOD) from the engine to the mobile computing device. The program instructions can be further executable to cause the processor to not provide the current flight segment or the state of aircraft engine if certain conditions are met. The program instructions can be further executable to cause the processor to receive approval whether to provide the current flight segment or the state of aircraft engine. The program instructions can be further executable to cause the processor to integrate the data sets, the classified data or the generated visualization onto a user account. The program instructions can be further executable to cause the processor to enable sharing of information between user accounts associated with respective mobile computing devices. The program instructions can be further executable to cause the processor to employ visual indications to provide an overlay of engine information inside the aircraft. The program instructions can be further executable to cause the processor to provide an overlay of location information, using a global positioning system, that includes geography and history. The program instructions can be further executable to cause the processor to provide an overlay of crew information that crew members opt to share. The program instructions can be further executable to cause the processor to enable controlling light emitting diode (LED) settings on an engine cowling.

### DESCRIPTION OF THE DRAWINGS

FIG. 1 illustrates a block diagram of an example, non-limiting mobile computing device facilitating capturing aircraft flight segment in accordance with one or more embodiments described herein.
FIG. 2 illustrates a block diagram of an example, non-limiting mobile computing device facilitating capturing aircraft flight segment including an evaluation component in accordance with one or more embodiments described herein.
FIG. 3 illustrates a block diagram of an example, non-limiting mobile computing device facilitating capturing aircraft flight segment including an integration component in accordance with one or more embodiments described herein.
FIG. 4 illustrates a block diagram of an example, non-limiting mobile computing device facilitating capturing aircraft flight segment including a transmission component in accordance with one or more embodiments described herein.
FIG. 5 illustrates a block diagram of an example, non-limiting mobile computing device facilitating capturing aircraft flight segment including an augmented reality component in accordance with one or more embodiments described herein.
FIG. 6 illustrates a block diagram of an example, non-limiting mobile computing device facilitating capturing aircraft flight segment including an interactive component in accordance with one or more embodiments described herein.
FIG. 7 illustrates a block diagram of an example, non-limiting system facilitating capturing aircraft flight segment in accordance with one or more embodiments described herein.
FIG. 8 illustrates a block diagram of an example, non-limiting system facilitating capturing aircraft flight segment including a sync component in accordance with one or more embodiments described herein.
FIG. 9 illustrates a block diagram of an example, non-limiting system facilitating capturing aircraft flight segment including an audit component in accordance with one or more embodiments described herein.
FIG. 10 illustrates a block diagram of an example, non-limiting system facilitating capturing aircraft flight segment including a scheduling component in accordance with one or more embodiments described herein.
FIG. 11 illustrates a block diagram of an example, non-limiting system facilitating capturing aircraft flight segment including a resolution component in accordance with one or more embodiments described herein.
FIG. 12 illustrates a block diagram of an example, non-limiting system facilitating capturing aircraft flight segment including a communication component in accordance with one or more embodiments described herein.
FIGs. 13 and 14 illustrate an example, non-limiting computer-implemented method facilitating capturing aircraft flight segment in accordance with one or more embodiments described herein.
FIG. 15 illustrates a flow diagram of an example, non-limiting computer-implemented method facilitating capturing aircraft flight segment in accordance with one or more embodiments described herein.
FIG. 16 illustrates a block diagram of an example, non-limiting operating environment in which one or more embodiments described herein can be facilitated.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

One or more embodiments described herein can employ a mobile computing device to capture valuable information on aircraft flight legs. A mobile computing device can be portable devices capable of operating, executing and providing services and applications. A mobile computing device can be, but is not limited to, laptops, cell phones, smart phones, netbooks, tablets, personal digital assistants (PDAs), fitness trackers, smart watches, etc. The captured data can be analyzed and classified into current flight segment, state of aircraft engine and type of engine.

Some embodiments described herein can generate a visualization (e.g., visual display) regarding the current flight segment, the state of aircraft engine and the type of engine. The visual display can allow the flying customers (e.g., customers, flying public, passengers, travelers, users, etc.) to have visibility into what is happening outside of an aircraft cabin. The flying customers can receive detailed information of the aircraft that is being operated as well as the conditions it is experiencing. The flying customers can also interact with the information provided to discover new learning opportunities. The use of real-time data can engage the user and provide exposure to the engine brand while the flight is in operation.

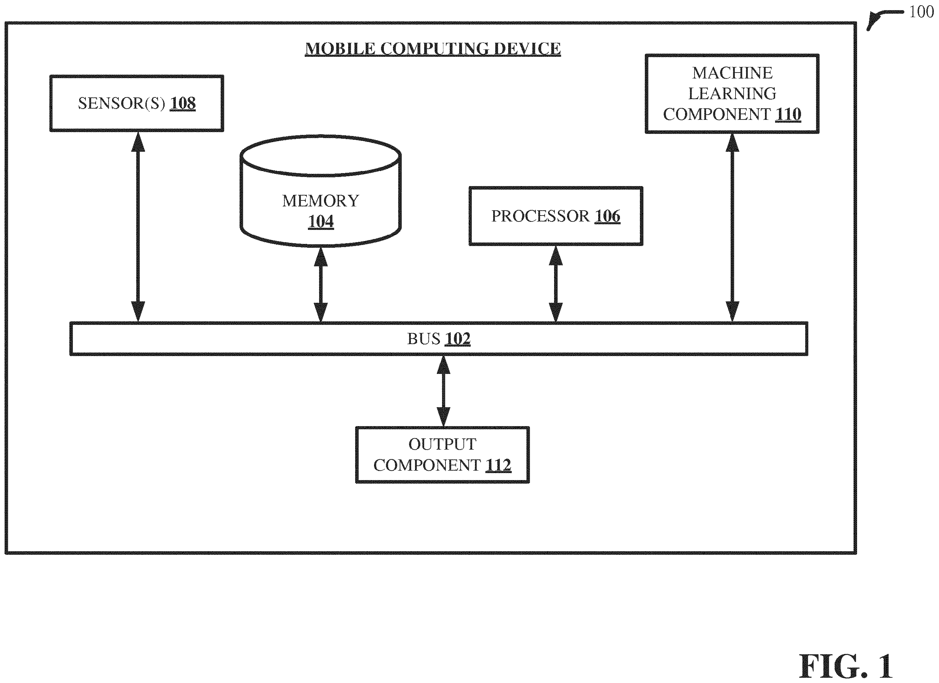

The embodiments described herein can also aggregate widely available data and link it with a user's account (e.g., flight profile) to provide a way to track lifetime statistics of a traveler while also providing the traveler live information about the traveler's flights. FIG. 1 illustrates a block diagram of an example, non-limiting system facilitating capturing aircraft flight segment in accordance with one or more embodiments described herein. Aspects of mobile computing devices (e.g., mobile computing device 100 and the like), apparatuses or processes explained in this disclosure can constitute one or more machine-executable components embodied within one or more machines, e.g., embodied in one or more computer readable mediums (or media) associated with one or more machines. Such components, when executed by the one or more machines, e.g., computers, computing devices, virtual machines, etc., can cause the machines to perform the operations described.

In various embodiments, the mobile computing device 100 can be any type of component, machine, device, facility, apparatus, and/or instrument that comprises a processor. In some embodiments, the mobile computing device 100 is capable of effective and/or operative communication with a wired and/or wireless network. Components, machines, apparatuses, devices, facilities, and/or instrumentalities that can comprise the mobile computing device 100 can include, but are not limited to, tablet computing devices, handheld devices, server class computing machines and/or databases, laptop computers, notebook computers, desktop computers, cell phones, smart phones, consumer appliances and/or instrumentation, industrial and/or commercial devices, digital assistants, multimedia Internet enabled phones, multimedia players, and the like.

As illustrated in FIG. 1, the mobile computing device 100 can comprise bus 102, memory 104, processor 106, sensors 108, machine learning component 110 and/or output component 112. The bus 102 can provide for interconnection of various components of the mobile computing device 100. The memory 104 and processor 106 can carry out computation and/or storage operations of the mobile computing device 100 as described herein. It is to be appreciated that in some embodiments one or more mobile computing device components can communicate wirelessly with other components, through a direct wired connection or integrated on a chipset.

In one or more embodiments described herein of mobile computing device 100, predictive analytics can be used to automatically classify data sets used by the mobile computing device 100 to facilitate generating a visualization regarding current flight segment, state of aircraft and type of engine. For example, the automatic generation can be based on information retained in a knowledgebase. As used herein, the term "knowledgebase" can be a database or other storage location or repository that can store one or more types of information. All such embodiments are envisaged.

The knowledgebase can comprise information related to classified data sets. In some embodiments, the information related to the classified data sets can be gathered over time and retained in the knowledgebase. In some embodiments, the information gathered can include operation, location, altitude, speed, orientation, vibration data and/or noise data of an engine. Based on the obtained information, the mobile computing device 100 can evaluate the knowledgebase (or multiple knowledgebases) and generate one or more patterns and/or can map information known about the data sets to the information known about other data sets. The predictive analytics of mobile computing device 100 can determine that, if information of the data sets is similar to one or more other data sets, the similar data sets can be utilized to facilitate automatically mapping different data sets.

The computer processing systems, computer-implemented methods, apparatus and/or computer program products described herein can employ hardware and/or software to generate a visualization regarding current flight segment, state of aircraft engine and type of engine that are highly technical in nature, that are not abstract and that cannot be performed as a set of mental acts by a human. For example, the one or more embodiments can perform the lengthy and complex interpretation and analysis on a copious amount of available information to classify data sets. In another example, the one or more embodiments can perform predictive analytics on a large amount of data to facilitate automatically mapping different data sets with a high level of accuracy, even in the absence of detailed knowledge about the data sets. Accuracy can be evaluated by comparing a training set with a test set. After training a model employing a training set, accuracy can be calculated using a test set by computing percentage of output generated by the model running on the training set elements that matches a predicted target.

In various embodiments, the sensors 108 can respectively provide data sets, wherein the data sets include operation, location, altitude, speed, orientation, vibration data and noise data of an aircraft. The data sets can be captured by the mobile computing device 100 via the sensors 108. The data sets can be classified, via the machine learning component 110, to capture the leg of a flight that an aircraft is in, e.g., the aircraft engine is at idle, takeoff, climb, cruise, landing, thrust reverse levels, etc. For example, the one or more sensors 108 can comprise an accelerometer. The accelerometer can provide orientation change and vibration data. In another example, the sensors 108 can comprise a microphone that can receive aircraft engine audio information to capture noise data. The noise data can be the sound pressure level that is produced by the aircraft engine. The noise data can be correlated to engine operation while in flight. In yet another example, the sensors 108 can include a global positioning system (GPS) that can provide location data, an altimeter that can determine altitude or a speedometer that can determine speed.

In yet another example, the sensors 108 also receive streaming packets of continuous engine operating data (CEOD) from the engine to the mobile computing device 100. The packets of CEOD can be transmitted via transmission technology such as, but not limited to, Bluetooth®, Wi-Fi® or near field communication (NFC). A compression scheme such as, but not limited to, LZ4 can be employed to allow for the compression of streaming data through representation of the data in small pairs of 4-byte packages.

The machine learning component 110 can employ the data sets, captured via the sensors 108, to classify which segment of flight the aircraft is in and provide detailed information back to the user via the output component 112. The sensors 108 can aggregate the data sets and the machine learning component 110 can classify which flight segment the aircraft is in instantaneously. The machine learning component 110 can classify the data sets into current flight segment, state of aircraft engine and type of engine. For example, the machine learning component 110 can determine at least one of whether: an aircraft engine is at idle, the aircraft is in takeoff, the aircraft is climbing, the aircraft is cruising, the aircraft is landing, or thrust reverse levels of the aircraft. The machine learning component 110 can determine the state of aircraft engine based in part on analysis of audio information of the aircraft engine.

The machine learning component 110 can employ artificial intelligence techniques to classify the data sets or the type of engine. Based on the vibration data and noise data, the machine learning component 110 can also determine the type of engine, which can include the model number, year manufactured, etc. The data sets collected from the mobile computing device 100 can be shared with another mobile computing device 100 via the transmission component 402. The sharing of data sets can provide a much higher confidence level because the data sets can be collected from different points in an aircraft. Depending on where the mobile computing device 100 is placed on an aircraft, the vibration data or noise data can vary.

Some embodiments of the present invention herein can employ artificial intelligence (AI) to facilitate automating one or more features of the present invention. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) of the present invention, components of the present invention can examine the entirety or a subset of the data to which it is granted access and can provide for reasoning about or determine states of the system, environment, etc. from a set of observations as captured *via* events and/or data. Determinations can be employed to identify a specific context or action, or can generate a probability distribution over states, for example. The determinations can be probabilistic - that is, the computation of a probability distribution over states of interest based on a consideration of data and events. Determinations can also refer to techniques employed for composing higher-level events from a set of events and/or data.

Such determinations can result in the construction of new events or actions from a set of observed events and/or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, etc.)) schemes and/or systems (e.g., support vector machines, neural networks, expert systems, Bayesian belief networks, fuzzy logic, data fusion engines, etc.) in connection with performing automatic and/or determined action in connection with the claimed subject matter. Thus, classification schemes and/or systems can be used to automatically learn and perform a number of functions, actions, and/or determination.

A classifier can map an input attribute vector, z = (z1, z2, z3, z4, *zn*), to a confidence that the input belongs to a class, as by f(z) = *confidence*(*class*). Such classification can employ a probabilistic and/or statistical-based analysis (*e*.*g*., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, *e*.*g*., naive Bayes, Bayesian networks, decision trees, neural networks, fuzzy logic models, and/or probabilistic classification models providing different patterns of independence can be employed. Classification as used herein also is inclusive of statistical regression that is utilized to develop models of priority.

The classified data sets analyzed by the machine learning component 110 can be provided to the user via a visual display on the mobile computing device 110. The output component 112 can generate a visualization (e.g., visual display) regarding the current flight segment, the state of aircraft engine and the type of engine. However, the output component 112 can also deny providing (e.g., does not provide) the current flight segment or the state of aircraft engine if certain conditions are met. For example, if an aircraft was about to land and decided to retake back off again or if there was an unforeseen engine event, it may be in the best interests of the flying public to not immediately learn of that information as to avoid concern.

In a different implementation, the output component 112 can also receive approval whether to provide the current flight segment or the state of aircraft engine. For example, approval can be required prior to generating a visual display. This process can be performed manually where no visual display can be generated if approvals are switched off. Artificial intelligence can also be employed to automate the process so that information that may create panic in the flying public will be denied for requests to generate a visual display.

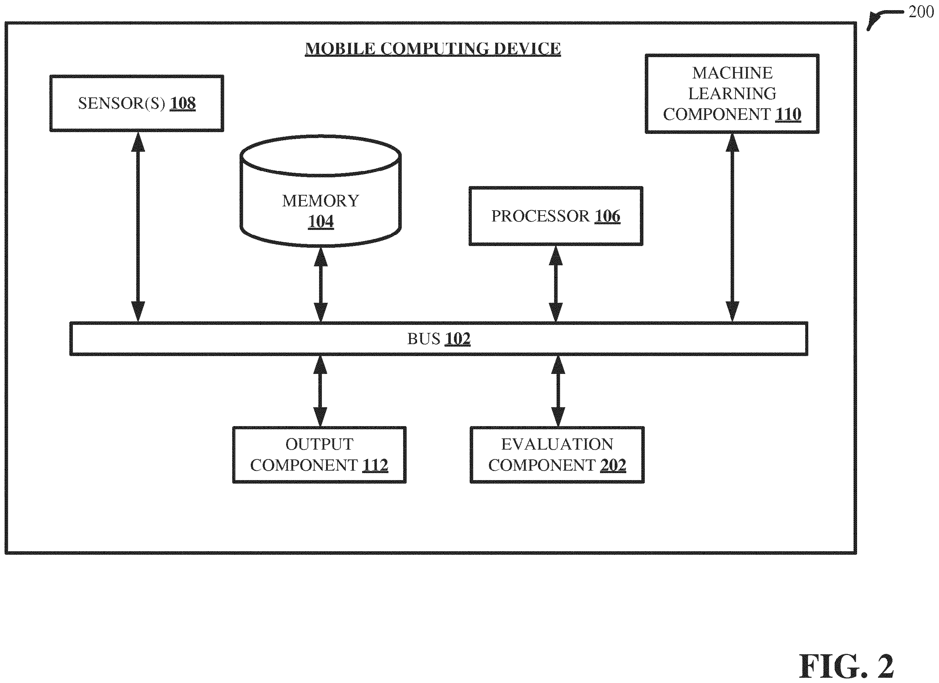

The output component 112 can also generate a visual display that allows a traveler to provide feedback on comfort level of a seat or flight or satisfaction of service. FIG. 2 illustrates a block diagram of an example, non-limiting mobile computing device 200 facilitating capturing aircraft flight segment including an evaluation component 202 in accordance with one or more embodiments described herein. Repetitive description of like elements employed in other embodiments described herein is omitted for sake of brevity. The evaluation component 202 can provide questions for rating of comfort level of seat or flight or satisfaction of service. The feedback or rating can be in the form of a numerical value, a narrated response, marks or symbols that represents satisfaction values, etc.

The evaluation component 202 can provide questions that ask whether the seat was comfortable. The questions can ask whether the flight was bumpy. The questions can also ask whether the engine or other passengers were loud. The questions can also be whether the flight attendants provided satisfactory service. The questions can be updated or changed over time to meet the business model. In some embodiments, the evaluation component 202 can also be employed to allow the travelers to ask questions or raise concerns. The evaluation component 202 can be turned off or changed so that no feedback is accepted or only certain types of feedback are accepted. For example, if there is an overwhelming number of responses or questions are made, that feature may be turned off and only numerical ratings are accepted.

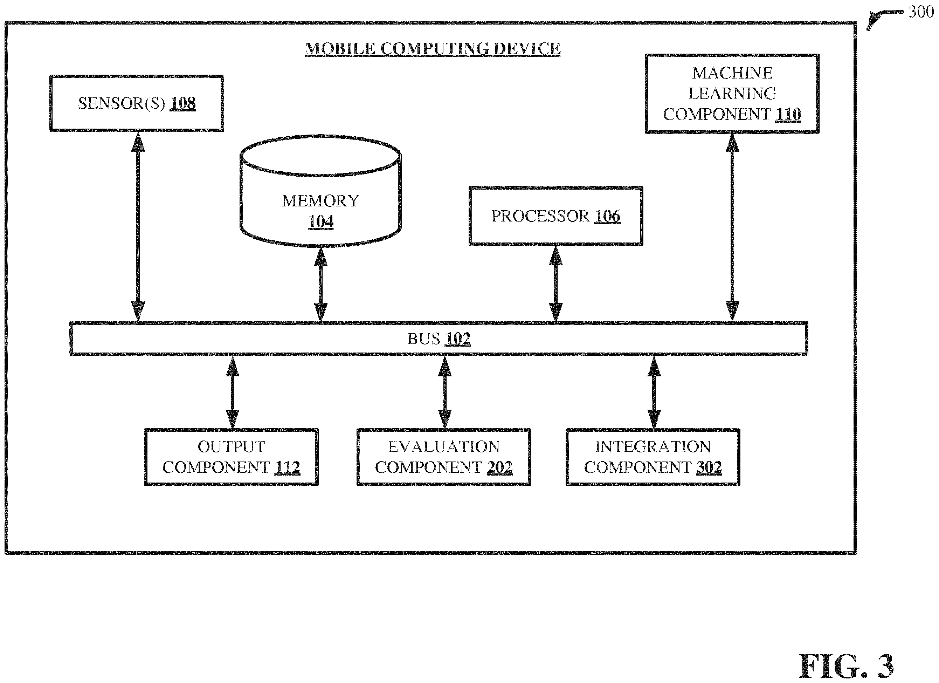

FIG. 3 illustrates a block diagram of an example, non-limiting mobile computing device 300 facilitating capturing aircraft flight segment including an integration component 302 in accordance with one or more embodiments described herein. Repetitive description of like elements employed in other embodiments described herein is omitted for sake of brevity. The integration component 302 can integrate the data sets, the classified data or the generated visualization onto a user account. The user account or flight profile of a traveler can be accessed on the mobile computing device 300 and the like. The user account can also be accessed on another computing device. For example, while in flight, the user can access the user account via the mobile computing device 300 and the like. However, once reached his work office, the user can access the user account by logging in via a desktop computer.

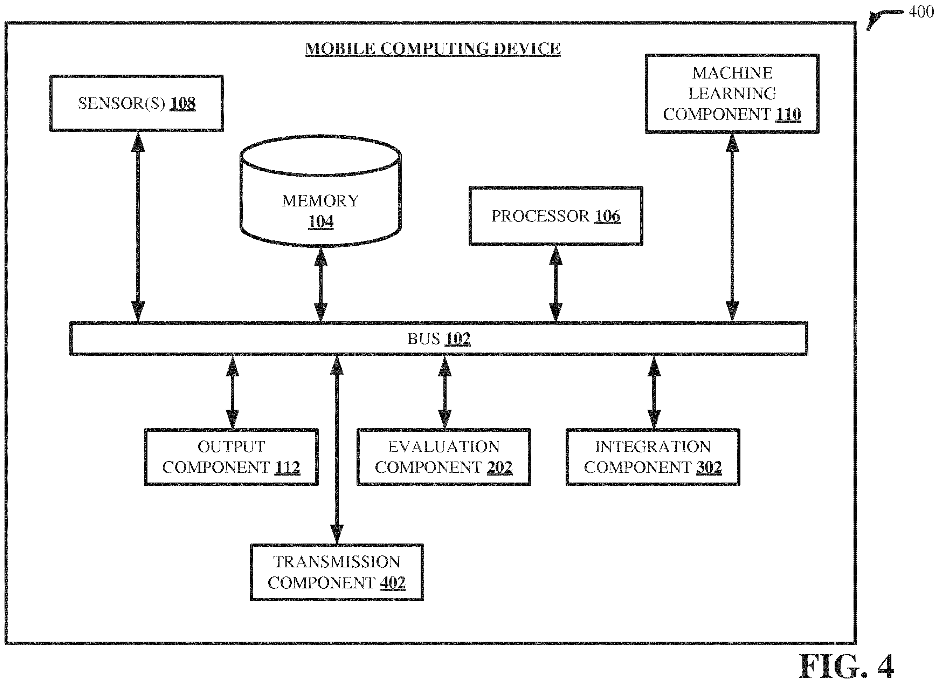

Data that are integrated on to a user account can used to share between users. FIG. 4 illustrates a block diagram of an example, non-limiting mobile computing device 400 facilitating capturing aircraft flight segment including a transmission component 402 in accordance with one or more embodiments described herein. Repetitive description of like elements employed in other embodiments described herein is omitted for sake of brevity. The transmission component 402 can enable sharing of information between user accounts associated with respective mobile computing devices. For example, the information within a user account associated with a mobile computing device can be shared with another user. The user can select the type of data that the user wants to share. For example, the user can share information as to the different types of plane the user has flown own. In another example, the user can select to share the lifetime air mileage accumulated by the user. In yet another example, the user can also select to share the vibration data and noise data collected from a recent flight.

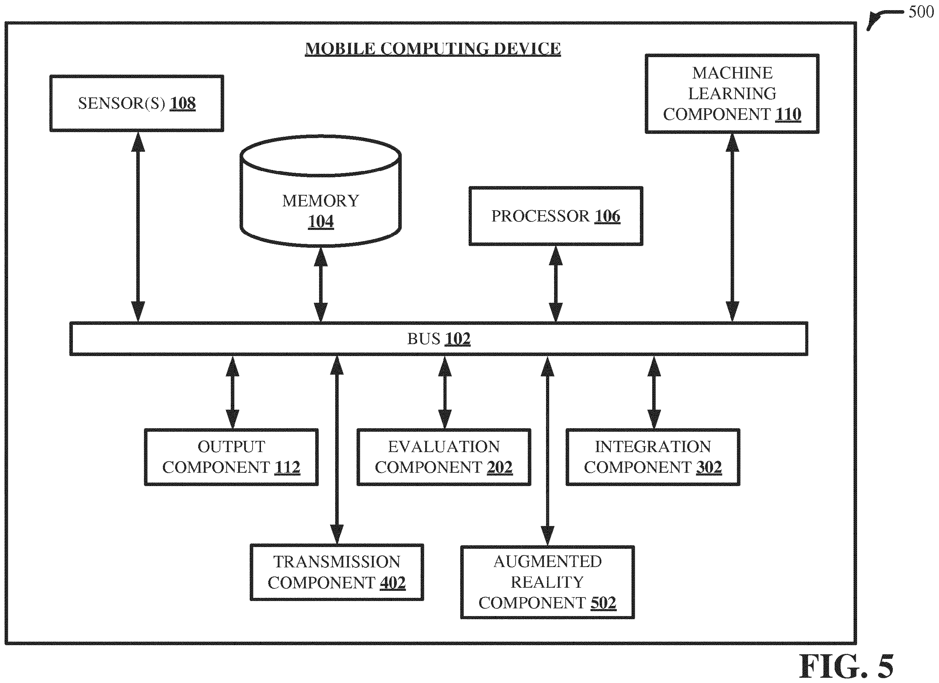

FIG. 5 illustrates a block diagram of an example, non-limiting mobile computing device 500 facilitating capturing aircraft flight segment including an augmented reality component 502 in accordance with one or more embodiments described herein. Repetitive description of like elements employed in other embodiments described herein is omitted for sake of brevity. The augmented reality component 502 can employ visual indications to provide an overlay of engine information inside the aircraft. More specifically, the augmented reality component 502 can employ an image capturing device within the mobile computing device 500 to determine the positioning of the mobile computing device 500 with respect to the engine.

Based on the positioning of the mobile computing device 500 with respect to the engine, the augmented reality component 502 can provide a customized, augmented reality, view of the engine enabling a passenger to see inside the engine. For example, features and data from the engine can be gleaned from the augmented reality component 502 while the camera is pointed at the engine. The augmented reality component 502 can display different features of an engine for educational purposes by overlaying engine information, operating parameters, brand of the engine, etc., on an image of the engine.

The augmented reality component 502 can also provide an overlay of location information, using a GPS, that includes geography and history. For example, when flying over the Grand Canyon, the augmented reality component 502 can employ a GPS to determine and provide the location of the aircraft. The augmented reality component 502 can also provide images of the Grand Canyon. The images of the Grand Canyon can be overlay with information of the geography and history of the area.

The augmented reality component 502 can also provide an overlay of crew information that crew members opt to share. The crew members can include the flight attendants, pilots, or anyone part of a particular airline for a particular flight. A traveler who is traveling on that particular flight can hold up the mobile computing device 500 towards a crew member for that flight to receive information published by that crew member. The augmented reality component 502 can provide access to information on crew members for a particular flight by verifying from the user account that the traveler is on the same flight. Access to information on crew members can be provided within a set time prior to taking off and landing.

The crew members can opt to publish and share information about themselves regarding their hobbies, interests, years of services, etc., to create an intimate experience for both the travelers and the crew members who are providing their services. The augmented reality component 502 can employ facial recognition to determine which crew member's information to display. The display can be an image of the crew member with an overlay of published information. The image of the crew member can be the image that was used during facial recognition or the image can also be a previously taken photo.

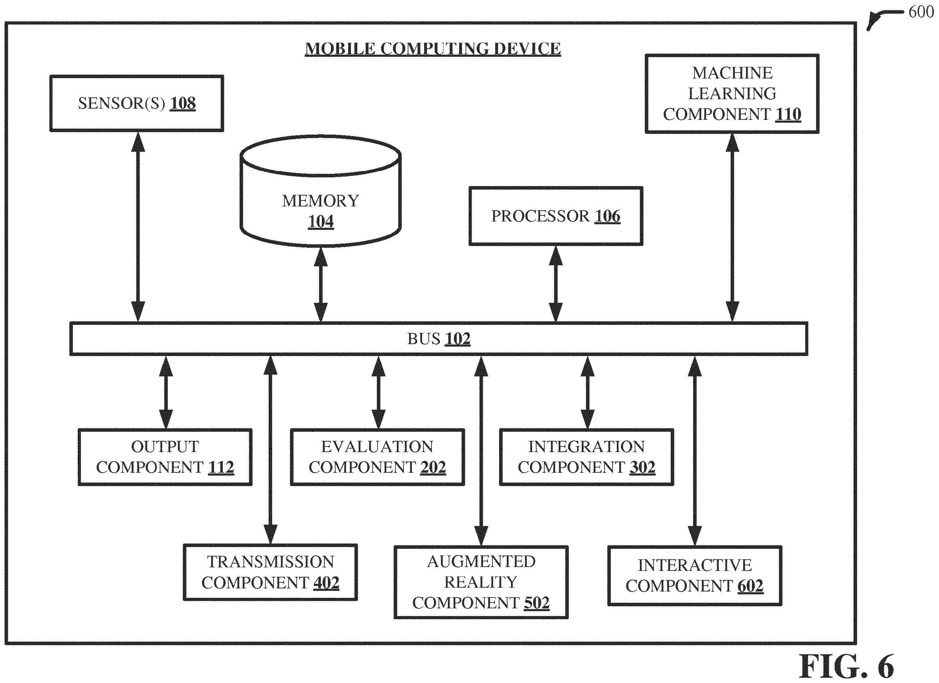

FIG. 6 illustrates a block diagram of an example, non-limiting mobile computing device 600 facilitating capturing aircraft flight segment including an interactive component 602 in accordance with one or more embodiments described herein. Repetitive description of like elements employed in other embodiments described herein is omitted for sake of brevity. The interactive component 602 can enable controlling light emitting diode (LED) settings on an engine cowling. For example, a user can interact with the LED features on the engine cowling such as the LED color, flashing pattern and intensity. The LED settings on the engine cowling can be varied by a traveler, via the interactive component 602, while inflight or parked at a gate. By installing a variable color, frequency and intensity LED array on the engine in a location such that will be visible to the flying customers inflight from the cabin and associating a wireless control with users of the mobile computing device 600, a user can change the color, flashing pattern and/or intensity of the LED display from the cabin as they fly or while the engine is parked at a gate.

The location of the LED array can be optimized for passenger viewing and not interfere with Federal Aviation Administration (FAA) or European Aviation Safety Agency (EASA) requirements for aircraft exterior lighting. For example, an internal LED strip can be placed inside of the engine cowling to create a glowing effect instead of a bright light that can be blinding to the pilot. A cue can be set so that any time there are agreeing requests, those requests can be collapsed and used as the LED setting. The ability to select the LED setting can allow for direct interaction between the flying customers on a commercial flight and the engine on-wing, which can increase customer's desire and interest for a certain engine brand. If the flyers become invested in what brand of engine they are flying on, they may be able to influence the market.

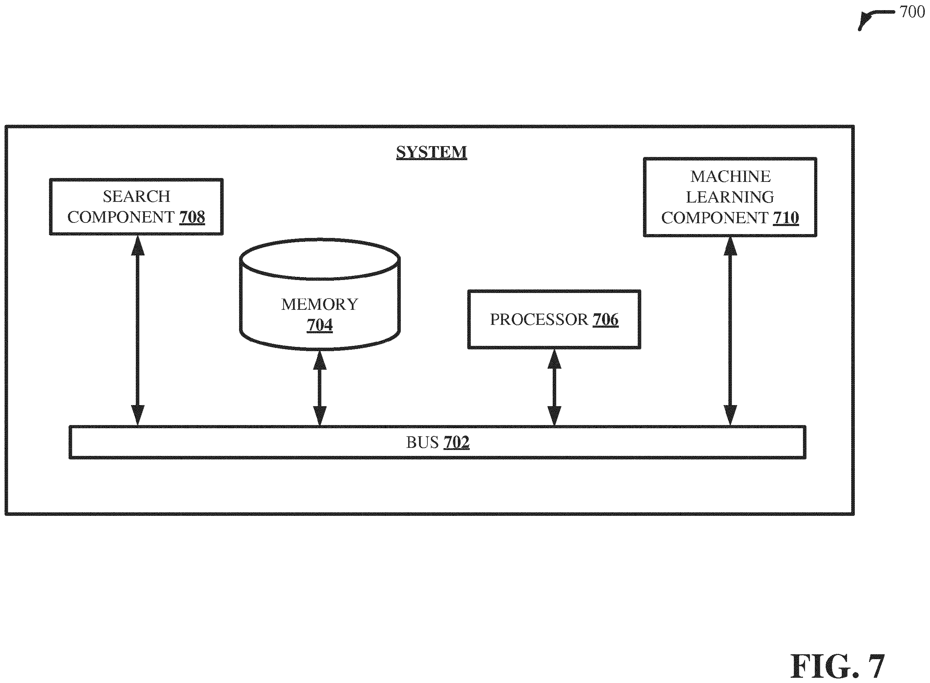

FIG. 7 illustrates a block diagram of an example, non-limiting system 700 facilitating capturing aircraft flight segment in accordance with one or more embodiments described herein. Repetitive description of like elements employed in other embodiments described herein is omitted for sake of brevity. As illustrated in FIG. 7, the system 700 can comprise bus 702, memory 704, processor 706, search component 708 and/or machine learning component 710. The bus 702 can provide for interconnection of various components of the system 700. The memory 704 and processor 706 can carry out computation and/or storage operations of the system 700 as described herein. It is to be appreciated that in some embodiments one or more system components can communicate wirelessly with other components, through a direct wired connection or integrated on a chipset.

The search component 708 can perform an Internet search and aggregate historical flight information relevant to a user to determine at least one of: user lifetime air mileage, flight segments traveled, aircraft traveled, engine usage, statistics on cruise speeds, altitudes or frequent flyer miles. For example, the search component 708 can search for real time information on flight by using data sources as well as collecting live data information from news and social media. This data can be aggregated with a user account to track lifetime air mileage, flight segments traveled, aircraft traveled, engine usage, statistics on cruise speeds, altitudes or frequent flyer miles (e.g., frequent flyer classes), etc. The search component 708 can aggregate widely available flight information from news and social media and couple that with information from the mobile computing device 100 (and the like) such as the type of aircraft, tail number, route, type of engine, etc.

The aggregated data can be integrated onto a user account via the integration component 302. The integrated data can be shared with other users via the transmission component 402. For example, the users can share information as to the different types of aircraft that the users have flown in or that the users have an affinity towards. The users can share and compare frequent flyer miles or frequent flyer classes to see how they stand relative to other people. The users can compare their lifetime air mileage on a certain type of aircraft. The users can compare how many times they have flown into a certain airport.

The machine learning component 710 can scan the Internet search for live information displayed via social media or news outlets that is relevant to the user's travel history. For example, the machine learning component 710 can scan and evaluate the Internet search for information pertaining to the user lifetime air mileage, flight segments traveled, aircraft traveled, engine usage, statistics on cruise speeds, altitudes or frequent flyer miles. In an example, the machine learning component 710 can scan the Internet search for news published regarding the current flight or aircraft that the user is traveling on. In another example, the machine learning component 710 can also scan the Internet search for photos posted on social media linked to the user account to create memories from trips.

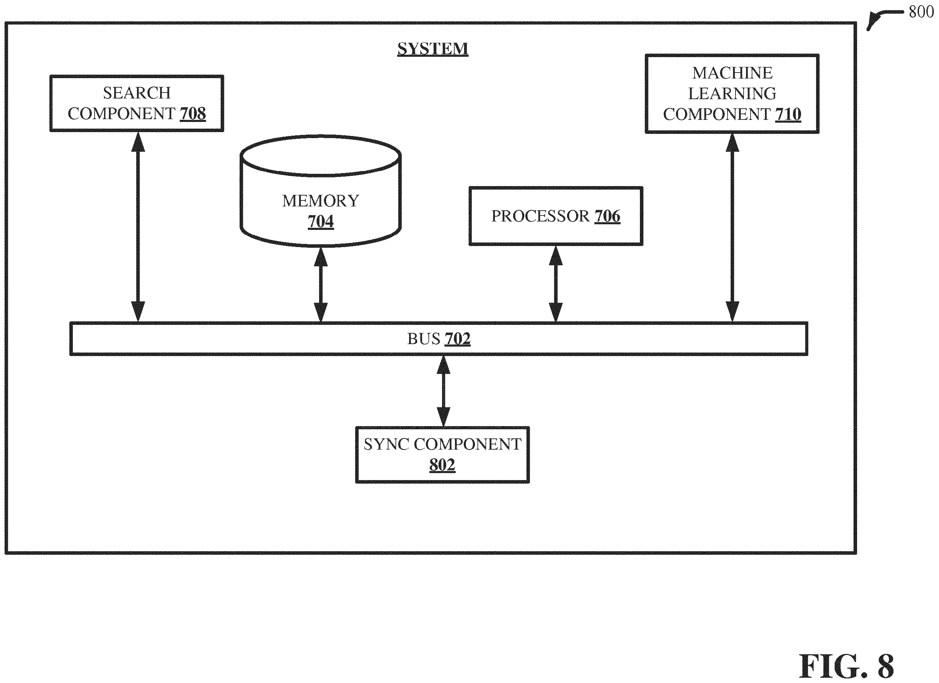

FIG. 8 illustrates a block diagram of an example, non-limiting system 800 facilitating capturing aircraft flight segment including a sync component 802 in accordance with one or more embodiments described herein. Repetitive description of like elements employed in other embodiments described herein is omitted for sake of brevity. The information evaluated by the machine learning component 710 can be synced with the user account to generate the user lifetime flight statistics. The aggregation of data from multiple sources enables building of lifetime flight segment, engine usage, statistics on cruise speeds, altitudes, etc.

The search component 708 can aggregate information from various flight data sources and couple it live with a flying customer's user account. The machine learning component 710 can be trained to make observations about flights based on social media and news outlets. The sync component 802 can sync information from the Internet search to a user account to generate user lifetime flight statistics. The sync component 802 can also sync location data of photos to the historical flight information relevant to the user. For example, the sync component 802 can link photos from various geo-tagged locations to flight details to create memories from trips. The sync component 802 can also sync vibration data and noise data from the user account of different users and evaluate comfort levels on a seat by seat basis or comfort levels of flight or satisfaction of service. Based on the vibration data and noise data synced from different user accounts, the sync component can evaluate that certain seats are noisier than others. They sync component 802 can also analyze this statistical evaluation against the ratings provided by the users via the evaluation component 202 for a higher confidence level of accuracy.

The search component 708 and the sync component 802 can allow the users to further include information from Internet searches to the user account. The users can connect with each other and share this additional information. For example, the users can share that they have common flights, engines, travel schedules, etc. An online community can be created to share flight information, lifetime flight statistics, etc. Information regarding the user's flight profile can be shared as a community, which creates a social aspect to the embodiments described herein. A reward-based system can be a source of enticement to get the flying public to reach a certain flyer mileage for a certain airline or engine brand. For example, the flying customer can receive an award for reaching a certain flyer mileage by flying with a certain engine brand.

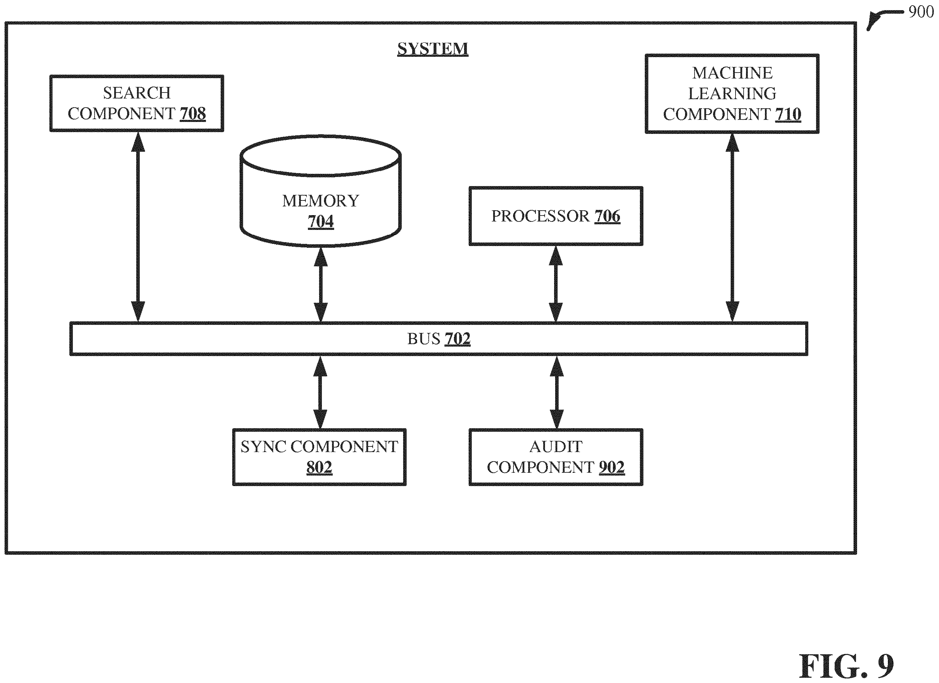

FIG. 9 illustrates a block diagram of an example, non-limiting system 900 facilitating capturing aircraft flight segment including an audit component 902 in accordance with one or more embodiments described herein. Repetitive description of like elements employed in other embodiments described herein is omitted for sake of brevity. The audit component 902 can employ various sources of information to determine whether the user completed a task of traveling and validate the frequent flyer miles. For example, the audit component 902 can employ a neural network or artificial intelligence that uses various sources of information to make accurate determination of whether a user has completed the task of travelling from one point to another without cheating the system through location spoofing, using old ticketing information, or other ways to scam the system. The various data sources can be public or provided by the user to confirm the user completed the travel challenge issued to the user. The various sources of information can come from the user's media device such as airline accounts, confirmation numbers, global positioning system locations, photos, boarding passes, etc., in order to make a determination on whether a user has completed the task of travel that the user claimed would be done. For example, confirmation of a completed travel task can come from geo-tagged photos with timestamp posted on social media that captures the user. The advantage of using various sources over relying only on a GPS location is that the user can spoof the GPS to change location without actually changing location.

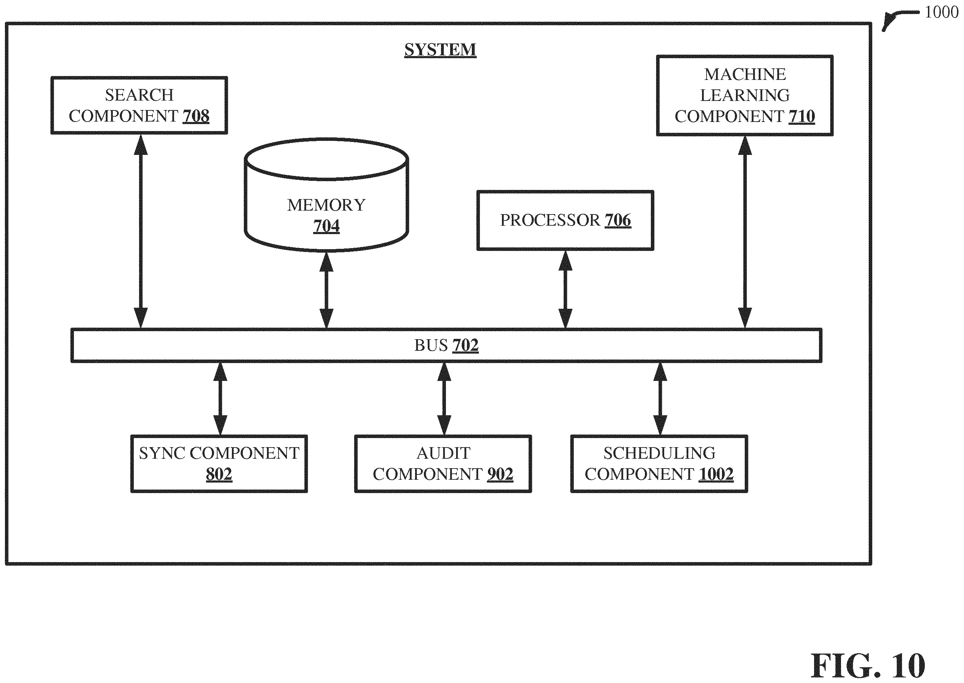

The audit component 902 can also track and validate frequent flyer miles for the purposes of assisting the user with scheduling flights. FIG. 10 illustrates a block diagram of an example, non-limiting system 1000 facilitating capturing aircraft flight segment including a scheduling component 1002 in accordance with one or more embodiments described herein. Repetitive description of like elements employed in other embodiments described herein is omitted for sake of brevity. The scheduling component 1002 can assist with scheduling flights to achieve a certain frequent flyer miles class. For example, the scheduling component 1002 can employ artificial intelligence to track user lifetime air mileage and what frequent flyer status the user wants to be at. The scheduling component 1002 can perform an Internet search for a flight leg that can place the user at a certain frequent flyer status.

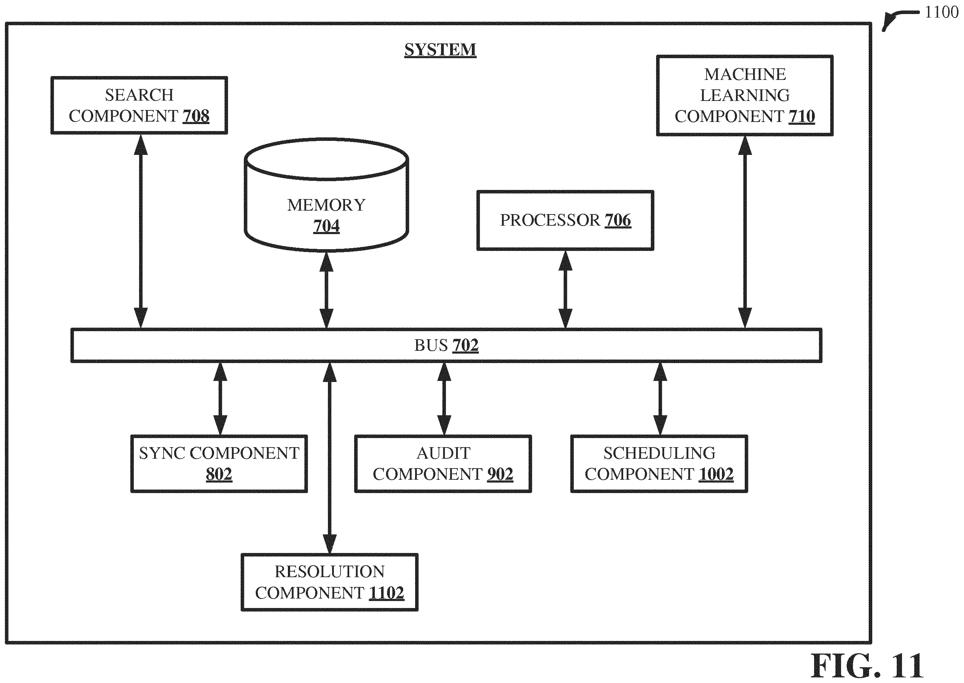

FIG. 11 illustrates a block diagram of an example, non-limiting system 1100 facilitating capturing aircraft flight segment including a resolution component 1102 in accordance with one or more embodiments described herein. Repetitive description of like elements employed in other embodiments described herein is omitted for sake of brevity. The resolution component 1102 can select a light emitting diode (LED) setting to display on an engine cowling. When the users select conflicting LED settings to display, the resolution component 1102 can set a cue so that agreeing requests can be the request employed by the resolution component 1102 to set the LED setting. For example, if there a number of requests from different users to change the color of the LED to a variety of colors, the resolution component 1102 can send a response that it will change the color of the LED based on the majority of agreeing requests. The LED setting can be set for a determined amount of time before it will be changed based on additional requests or based on the second highest number of agreeing requests, and so on.

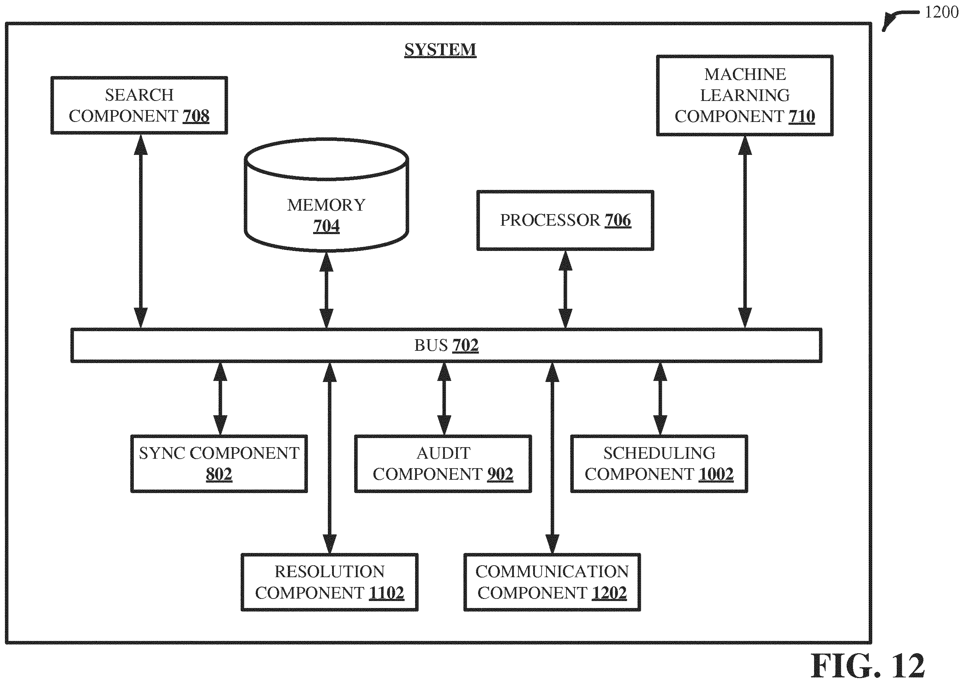

FIG. 12 illustrates a block diagram of an example, non-limiting system 1200 facilitating capturing aircraft flight segment including a communication component 1202 in accordance with one or more embodiments described herein. Repetitive description of like elements employed in other embodiments described herein is omitted for sake of brevity. The communication component 1202 can stream packets of continuous engine operating data (CEOD) from the engine to a mobile computing device (e.g., the mobile computing device 100 and the like). The compression of streaming packets of CEOD can be employed by the augmented reality component 502 to provide engine data (e.g., CEOD) to the user (e.g., via the mobile computing device 100 and the like). The compression scheme described herein can also be employed to stream other types of data to the mobile computing device 100 and the like.

The embodiments herein can reduce the data size of packets of information as they are streamed between an engine and a mobile computing device (e.g., mobile computing device 100 and the like) on the airframe allowing for better streaming rates and smaller bandwidth requirements. Due to the poor wireless signal on many commercial flights and the existence of carrier data fees, the smaller data sizes will make streaming interesting CEOD to customers both more feasibly and attractive. The embodiments herein can allow for a more efficient compression scheme. For example, there can be an increase in the quantity of data being streamed as well as the real-time nature of the stream such that a compression is needed extemporaneously to allow for seamless transmission of the stream to the mobile computing device 100 and the like.

The communication component 1202 can employ a compression scheme that allows for the compression of streaming packets of CEOD from the engine inflight to a customer (e.g., passenger, user, etc.) on the associated airframe. The communication component 1202 can use existing compression technology to reduce the size of the data transmission to an acceptable size for streaming to a mobile computing device over the air. The communication component 1202 can employ a compression scheme to provide live, real engine data analytics to the customers (e.g., passengers, users, etc.) on the airframe without being bogged down by the quantity of data being sent. For example, a compression scheme such a LZ4 can allow for the compression of streaming data through representation of the data in small pairs of 4-byte packages. This scheme is known for its streaming ability as well as its extremely high speeds of compression and decompression. A compression scheme such as LZ4 can minimize the amount of lag between the machine and the mobile computing device 100 (and the like) allowing for quick navigation between features in the visual display. However, gzip and LZO both boast higher compression ratios. Therefore, if it is determined that the size of the data stream is more significant of a performer limiter, then one of these can be replaced by LZ4. However, it is believed that the higher speeds of compression and decompression will be more significant. The communication component 1202 can employ existing transmission technology such as Bluetooth®, Wi-Fi® or near field communication (NFC) to stream the packets.

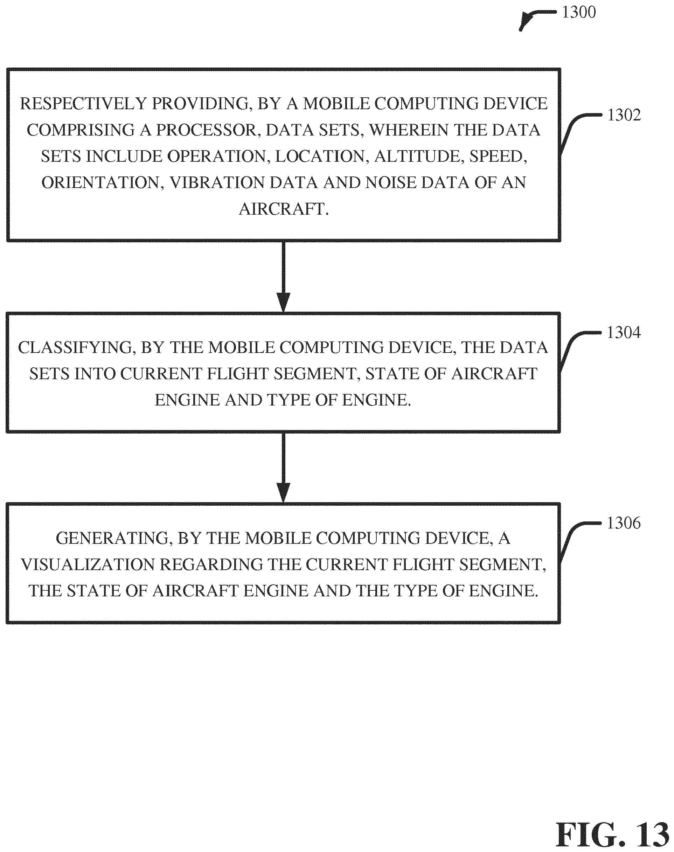

FIG. 13 illustrates an example, non-limiting computer-implemented method 1300 facilitating capturing aircraft flight segment in accordance with one or more embodiments described herein. Repetitive description of like elements employed in other embodiments described herein is omitted for sake of brevity. At 1302, the computer-implemented method 1300 can comprise respectively providing (e.g., via the sensors 108), by a mobile computing device comprising a processor, data sets, wherein the data sets include operation, location, altitude, speed, orientation, vibration data and noise data of an aircraft. At 1304, the computer-implemented method 1300 can comprise classifying (e.g., via the machine learning component 110), by the mobile computing device, the data sets into current flight segment, state of aircraft engine and type of engine. At 1306, the computer-implemented method 1300 can comprise generating (e.g., via the output component 112), by the mobile computing device, a visualization regarding the current flight segment, the state of aircraft engine and the type of engine.

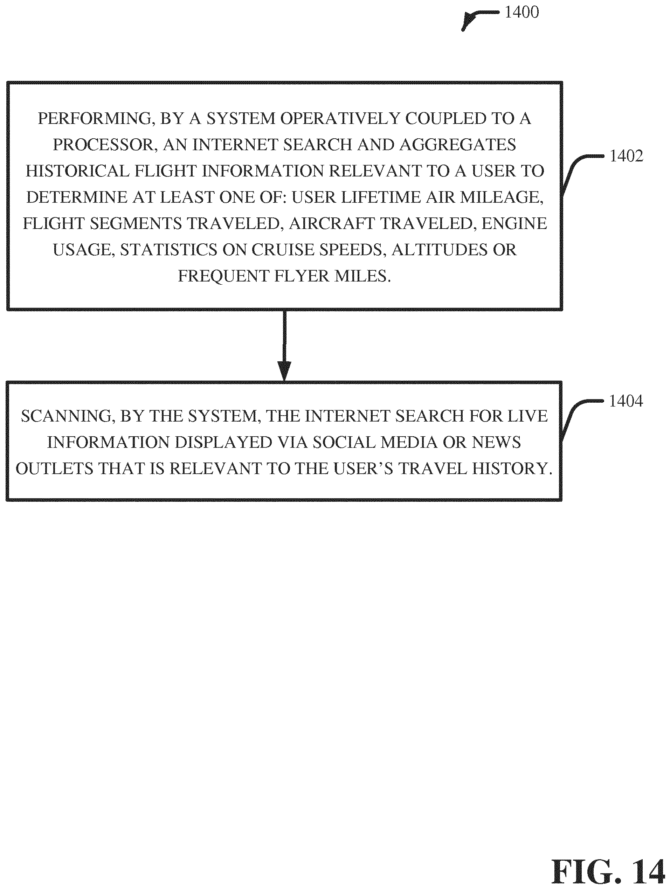

FIG. 14 illustrates an example, non-limiting computer-implemented method 1400 facilitating capturing aircraft flight segment in accordance with one or more embodiments described herein. Repetitive description of like elements employed in other embodiments described herein is omitted for sake of brevity. At 1402, the computer-implemented method 1400 can comprise performing (e.g., via the search component 708), by a system operatively coupled to a processor, an Internet search and aggregates historical flight information relevant to a user to determine at least one of: user lifetime air mileage, flight segments traveled, aircraft traveled, engine usage, statistics on cruise speeds, altitudes or frequent flyer miles. At 1404, the computer-implemented method 1400 can comprise scanning (e.g., via the machine learning component 710), by the system, the Internet search for live information displayed via social media or news outlets that is relevant to the user's travel history.

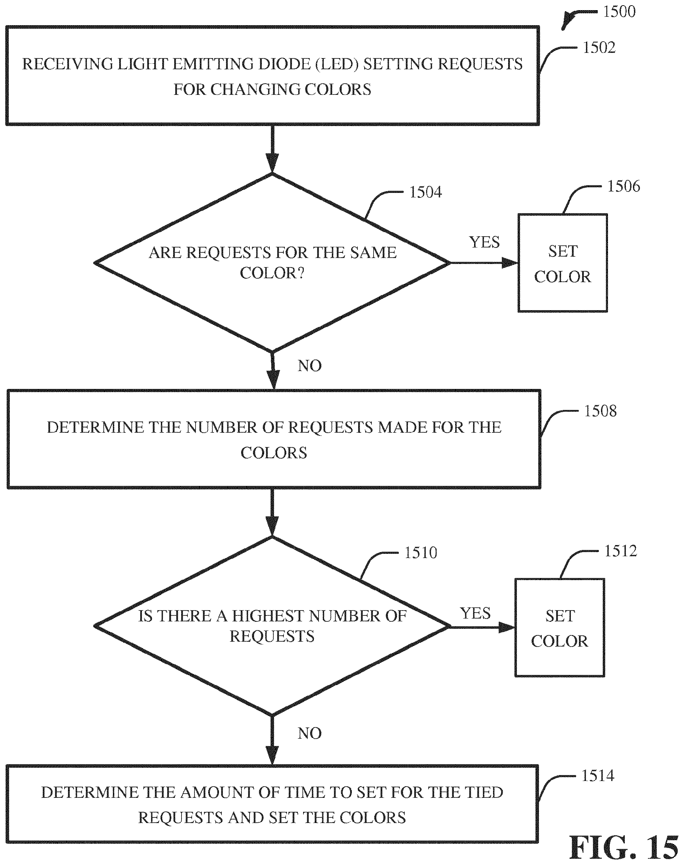

FIG. 15 illustrates a flow diagram of an example, non-limiting computer-implemented method 1500 facilitating capturing aircraft flight segment in accordance with one or more embodiments described herein. Repetitive description of like elements employed in other embodiments described herein is omitted for sake of brevity. At 1502, the computer-implemented method 1500 can comprise receiving (e.g., via the resolution component 1102) LED setting requests for changing colors. At 1504, the computer-implemented method 1500 can comprise determining (e.g., via the resolution component 1102) whether the requests are for the same color. If yes, at 1506, the computer-implemented method 1500 can comprise setting (e.g., via the resolution component 1102) the color requested. If no, at 1508, the computer-implemented method 1500 can comprise determining (e.g., via the resolution component 1102) the number of requests made for the colors. At 1510, the computer-implemented method 1500 can comprise determining (e.g., via the resolution component 1102) if there is a highest number of requests. If yes, at 1512, the computer-implemented method 1500 can comprise setting (e.g., via the resolution component 1102) the color requested. If no, at 1514, the computer-implemented method 1500 can comprise determining (e.g., via the resolution component 1102) the amount of time to set for the tied requests and setting (e.g., via the resolution component 1102) the tied colors requested.

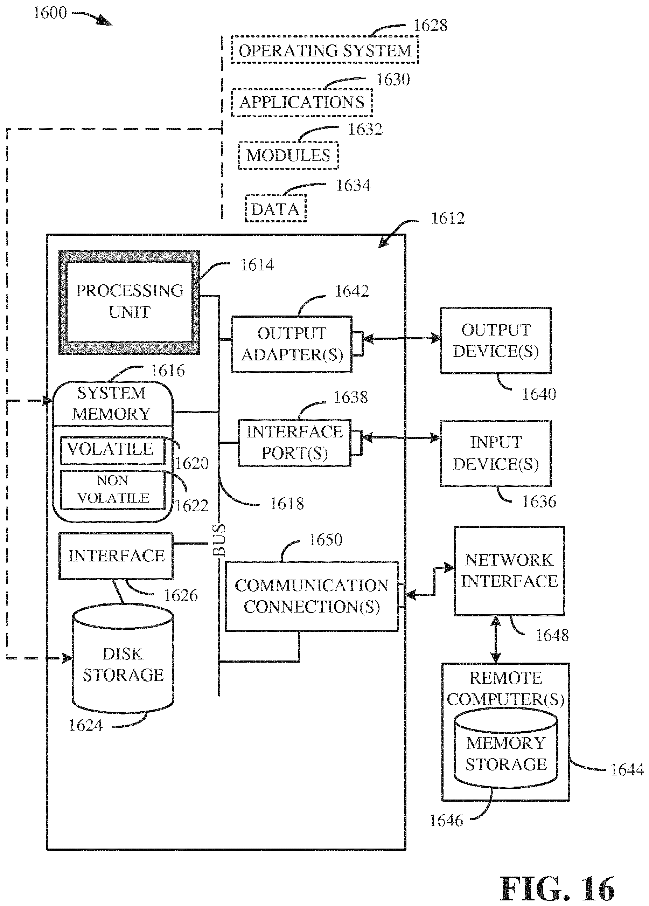

To provide a context for the various aspects of the disclosed subject matter, FIG. 16 as well as the following discussion are intended to provide a general description of a suitable environment in which the various aspects of the disclosed subject matter can be implemented. FIG. 16 illustrates a block diagram of an example, non-limiting operating environment in which one or more embodiments described herein can be facilitated. Repetitive description of like elements employed in other embodiments described herein is omitted for sake of brevity.

With reference to FIG. 16, a suitable operating environment 1600 for implementing various aspects ofthis disclosure can also include a computer 1612. The computer 1612 can also include a processing unit 1614, a system memory 1616, and a system bus 1618. The system bus 1618 couples system components including, but not limited to, the system memory 1616 to the processing unit 1614. The processing unit 1614 can be any of various available processors. Dual microprocessors and other multiprocessor architectures also can be employed as the processing unit 1614. The system bus 1618 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1394), and Small Computer Systems Interface (SCSI).

The system memory 1616 can also include volatile memory 1620 and nonvolatile memory 1622. The basic input/output system (BIOS), containing the basic routines to transfer information between elements within the computer 1612, such as during start-up, is stored in nonvolatile memory 1622. Computer 1612 can also include removable/non-removable, volatile/non-volatile computer storage media. FIG. 16 illustrates, for example, a disk storage 1624. Disk storage 1624 can also include, but is not limited to, devices like a magnetic disk drive, floppy disk drive, tape drive, Jaz drive, Zip drive, LS-100 drive, flash memory card, or memory stick. The disk storage 1624 also can include storage media separately or in combination with other storage media. To facilitate connection of the disk storage 1624 to the system bus 1618, a removable or non-removable interface is typically used, such as interface 1626. FIG. 16 also depicts software that acts as an intermediary between users and the basic computer resources described in the suitable operating environment 1600. Such software can also include, for example, an operating system 1628. Operating system 1628, which can be stored on disk storage 1624, acts to control and allocate resources of the computer 1612.

System applications 1630 take advantage of the management of resources by operating system 1628 through program modules 1632 and program data 1634, e.g., stored either in system memory 1616 or on disk storage 1624. It is to be appreciated that this disclosure can be implemented with various operating systems or combinations of operating systems. A user enters commands or information into the computer 1612 through input device(s) 1636. Input devices 1636 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1614 through the system bus 1618 via interface port(s) 1638. Interface port(s) 1638 include, for example, a serial port, a parallel port, a game port, and a universal serial bus (USB). Output device(s) 1640 use some of the same type of ports as input device(s) 1636. Thus, for example, a USB port can be used to provide input to computer 1612, and to output information from computer 1612 to an output device 1640. Output adapter 1642 is provided to illustrate that there are some output devices 1640 like monitors, speakers, and printers, among other output devices 1640, which require special adapters. The output adapters 1642 include, by way of illustration and not limitation, video and sound cards that provide a means of connection between the output device 1640 and the system bus 1618. It should be noted that other devices and/or systems of devices provide both input and output capabilities such as remote computer(s) 1644.

Computer 1612 can operate in a networked environment using logical connections to one or more remote computers, such as remote computer(s) 1644. The remote computer(s) 1644 can be a computer, a server, a router, a network PC, a workstation, a microprocessor based appliance, a peer device or other common network node and the like, and typically can also include many or all of the elements described relative to computer 1612. For purposes of brevity, only a memory storage device 1646 is illustrated with remote computer(s) 1644. Remote computer(s) 1644 is logically connected to computer 1612 through a network interface 1648 and then physically connected via communication connection 1650. Network interface 1648 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 1650 refers to the hardware/software employed to connect the network interface 1648 to the system bus 1618. While communication connection 1650 is shown for illustrative clarity inside computer 1612, it can also be external to computer 1612. The hardware/software for connection to the network interface 1648 can also include, for exemplary purposes only, internal and external technologies such as, modems including regular telephone grade modems, cable modems and DSL modems, ISDN adapters, and Ethernet cards.

The present invention may be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc., that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various aspects and embodiments of the present invention are defined by the following numbered clauses:
1. A computer-implemented method, comprising:
   performing, by a system operatively coupled to a processor, an Internet search and aggregating historical flight information relevant to a user to determine at least one of: user lifetime air mileage, flight segments traveled, aircraft traveled, engine usage, statistics on cruise speeds, altitudes or frequent flyer miles; and
   scanning, by the system, the Internet search for live information displayed via social media or news outlets that is relevant to the user's travel history.
2. The computer-implemented method of clause 1, further comprising syncing information from the Internet search to a user account to generate user lifetime flight statistics.
3. The computer-implemented method of clause 2, wherein the performing the Internet search and aggregating historical flight information relevant to the user comprises syncing location data of photos to the historical flight information relevant to the user.
4. The computer-implemented method of any preceding clause, wherein the performing the Internet search and aggregating historical flight information relevant to the user comprises syncing vibration data and noise data from the user account of different users and evaluating comfort levels on a seat by seat basis or comfort levels of flight or satisfaction of service.
5. The computer-implemented method of any preceding clause, further comprising employing various sources of information to determine whether the user completed a task of traveling and validating the frequent flyer miles.
6. The computer-implemented method of any preceding clause, further comprising assisting with scheduling flights to achieve a certain frequent flyer miles class.
7. The computer-implemented method of any preceding clause, further comprising selecting a light emitting diode (LED) setting to display on an engine cowling.
8. The computer-implemented method of any preceding clause, further comprising streaming packets of continuous engine operating data (CEOD) from the engine to a mobile computing device.
9. A system, comprising:
   a memory that stores computer executable components;
   a processor, operably coupled to the memory, and that executes computer executable components stored in the memory;
   a search component that performs an Internet search and aggregates historical flight information relevant to a user to determine at least one of: user lifetime air mileage, flight segments traveled, aircraft traveled, engine usage, statistics on cruise speeds, altitudes or frequent flyer miles; and
   a machine learning component that scans the Internet search for live information displayed via social media or news outlets that is relevant to the user's travel history.
10. The system of any preceding clause, further comprising a sync component that syncs information from the Internet search to a user account to generate user lifetime flight statistics.
11. The system of any preceding clause, wherein the search component also syncs location data of photos to the historical flight information relevant to the user.
12. The system of any preceding clause, further comprising an audit component that employs various sources of information to determine whether the user completed a task of traveling and validates the frequent flyer miles.
13. The system of any preceding clause, further comprising a scheduling component that assists with scheduling flights to achieve a certain frequent flyer miles class.
14. The system of any preceding clause, further comprising a resolution component that selects a light emitting diode (LED) setting to display on an engine cowling.
15. The system of any preceding clause, further comprising a communication component that streams packets of continuous engine operating data (CEOD) from the engine to a mobile computing device.
16. A computer program product for facilitating capturing aircraft flight segment, the computer program product comprising a computer readable storage medium having program instructions embodied therewith, the program instructions executable by a processor to cause the processor to:
   perform an Internet search and aggregate historical flight information relevant to a user to determine at least one of: user lifetime air mileage, flight segments traveled, aircraft traveled, engine usage, statistics on cruise speeds, altitudes or frequent flyer miles; and
   scan the Internet search for live information displayed via social media or news outlets that is relevant to the user's travel history.
17. A computer-implemented method, comprising:
   respectively providing, by a mobile computing device comprising a processor, data sets, wherein the data sets include operation, location, altitude, speed, orientation, vibration data and noise data of an aircraft;
   classifying, by the mobile computing device, the data sets into current flight segment, state of aircraft engine and type of engine; and
   generating, by the mobile computing device, a visualization regarding the current flight segment, the state of aircraft engine and the type of engine.
18. The computer-implemented method of any preceding clause, wherein the classifying the data sets into current flight segment comprises determining at least one of whether: an aircraft engine is at idle, the aircraft is in takeoff, the aircraft is climbing, the aircraft is cruising, the aircraft is landing, or thrust reverse levels of the aircraft.
19. The computer-implemented method of any preceding clause, wherein the respectively providing the data sets comprises receiving aircraft engine audio information and determining the state of aircraft engine based in part on analysis of audio information of the aircraft engine.
20. The computer-implemented method of any preceding clause, further comprising providing questions for rating of comfort level of seat or flight or satisfaction of service.
21. The computer-implemented method of any preceding clause, wherein the respectively providing the data sets comprises receiving streaming packets of continuous engine operating data (CEOD) from the engine to the mobile computing device.
22. The computer-implemented method of any preceding clause, wherein the generating the visualization regarding the current flight segment comprises not providing the current flight segment or the state of aircraft engine if certain conditions are met.
23. The computer-implemented method of any preceding clause, wherein the generating the visualization regarding the current flight segment comprises receiving approval whether to provide the current flight segment or the state of aircraft engine.
24. The computer-implemented method of any preceding clause, further comprising integrating the data sets, the classified data or the generated visualization onto a user account.
25. The computer-implemented method of any preceding clause, further comprising enabling sharing of information between user accounts associated with respective mobile computing devices.
26. The computer-implemented method of any preceding clause, further comprising employing visual indications to provide an overlay of engine information inside the aircraft.
27. The computer-implemented method of any preceding clause, wherein the employing visual indications comprises providing an overlay of location information, using a global positioning system, that includes geography and history.
28. The computer-implemented method of any preceding clause, wherein the employing visual indications comprises providing an overlay of crew information that crew members opt to share.
29. The computer-implemented method of any preceding clause, further comprising enabling controlling light emitting diode (LED) settings on an engine cowling.
30. A computer program product for facilitating capturing aircraft flight segment, the computer program product comprising a computer readable storage medium having program instructions embodied therewith, the program instructions executable by a processor to cause the processor to:
   respectively provide data sets, wherein the data sets include operation, location, altitude, speed, orientation, vibration data and noise data of an aircraft;
   classify the data sets into current flight segment, state of aircraft engine and type of engine; and
   generate a visualization regarding the current flight segment, the state of aircraft engine and the type of engine.

## Claims

1. A computer-implemented method, comprising:
performing, by a system operatively coupled to a processor, an Internet search and aggregating historical flight information relevant to a user to determine at least one of: user lifetime air mileage, flight segments traveled, aircraft traveled, engine usage, statistics on cruise speeds, altitudes or frequent flyer miles; and
scanning, by the system, the Internet search for live information displayed via social media or news outlets that is relevant to the user's travel history.

2. The computer-implemented method of claim 1, further comprising syncing information from the Internet search to a user account to generate user lifetime flight statistics.

3. The computer-implemented method of claim 2, wherein the performing the Internet search and aggregating historical flight information relevant to the user comprises syncing location data of photos to the historical flight information relevant to the user.

4. The computer-implemented method of either of claim 2 or 3, wherein the performing the Internet search and aggregating historical flight information relevant to the user comprises syncing vibration data and noise data from the user account of different users and evaluating comfort levels on a seat by seat basis or comfort levels of flight or satisfaction of service.

5. The computer-implemented method of any preceding claim, further comprising employing various sources of information to determine whether the user completed a task of traveling and validating the frequent flyer miles.

6. The computer-implemented method of claim 5, further comprising assisting with scheduling flights to achieve a certain frequent flyer miles class.

7. The computer-implemented method of any preceding claim, further comprising selecting a light emitting diode (LED) setting to display on an engine cowling.

8. The computer-implemented method of any preceding claim, further comprising streaming packets of continuous engine operating data (CEOD) from the engine to a mobile computing device.

9. A system, comprising:
a memory that stores computer executable components;
a processor, operably coupled to the memory, and that executes computer executable components stored in the memory;
a search component that performs an Internet search and aggregates historical flight information relevant to a user to determine at least one of: user lifetime air mileage, flight segments traveled, aircraft traveled, engine usage, statistics on cruise speeds, altitudes or frequent flyer miles; and
a machine learning component that scans the Internet search for live information displayed via social media or news outlets that is relevant to the user's travel history.

10. The system of claim 9, further comprising a sync component that syncs information from the Internet search to a user account to generate user lifetime flight statistics.

11. The system of claim 10, wherein the search component also syncs location data of photos to the historical flight information relevant to the user.

12. The system of any of claims 9 to 11, further comprising an audit component that employs various sources of information to determine whether the user completed a task of traveling and validates the frequent flyer miles.

13. The system of claim 12, further comprising a scheduling component that assists with scheduling flights to achieve a certain frequent flyer miles class.

14. The system of any of claims 9 to 13, further comprising a resolution component that selects a light emitting diode (LED) setting to display on an engine cowling.

15. The system of any of claims 9 to 14, further comprising a communication component that streams packets of continuous engine operating data (CEOD) from the engine to a mobile computing device.

16. A computer program product for facilitating capturing aircraft flight segment, the computer program product comprising a computer readable storage medium having program instructions embodied therewith, the program instructions executable by a processor to cause the processor to:
perform an Internet search and aggregate historical flight information relevant to a user to determine at least one of: user lifetime air mileage, flight segments traveled, aircraft traveled, engine usage, statistics on cruise speeds, altitudes or frequent flyer miles; and
scan the Internet search for live information displayed via social media or news outlets that is relevant to the user's travel history.
